# EUROPÄISCHE PATENTSCHRIFT

(11) **EP 1 825 242 B1**
(45) Veröffentlichungstag und Bekanntmachung des Hinweises auf die Patenterteilung: **24.08.2011**
(21) Anmeldenummer: 05850296.4
(22) Anmeldetag: 16.12.2005
(51) Int. Cl.: G01M 3/38

(54) **METALLURGISCHES GEFASS MIT EINEM LICHTSENSOR ZUR DETEKTION VON WASSERLECKAGEN**
METALLURGICAL VESSEL COMPRISING A LIGHT SENSOR FOR DETECTION OF WATER LEAKS
RECIPIENT METALLURGIQUE EQUIPE D'UN CAPTEUR DE LUMIERE POUR LA DETECTION DE FUITES D'EAU

(30) Priorität: 18.12.2004 DE 102004061082
(43) Veröffentlichungstag der Anmeldung: 29.08.2007
(73) Patentinhaber: SMS Siemag AG, 40237 Düsseldorf (DE)
(72) Erfinder: UEBBER, Norbert, 40764 Langenfeld (DE); SCHUBERT, Manfred, 46147 Oberhausen (DE); FALKENRECK, Udo, 44797 Bochum (DE); KEMPKEN, Jens, 41564 Kaarst (DE)
(74) Vertreter: Klüppel, Walter
(86) Internationale Anmeldenummer: PCT/EP2005/013611
(87) Internationale Veröffentlichungsnummer: WO 2006/063853

(56) Entgegenhaltungen:
- EP-A- 0 312 714
- EP-A- 1 422 506
- DE-A1- 3 013 465
- CHIRON B: "HIGHLY EFFICIENT PLASTIC OPTICAL FLUORESCENT FIBERS AND SENSORS" PLASTIC OPTICAL FIBERS, BELLINGHAM, WA, US, Bd. 1592, Januar 1991 (1991-01), Seiten 86-95, XP000390954
- FARENC J ET AL: "A FLUORESCENT PLASTIC OPTICAL FIBER SENSOR FOR THE DETECTION OF CORONA DISCHARGES IN HIGH VOLTAGE ELECTRICAL EQUIPMENT" REVIEW OF SCIENTIFIC INSTRUMENTS, AIP, MELVILLE, NY, US, Bd. 65, Nr. 1, Januar 1994 (1994-01), Seiten 155-160, XP000428561 ISSN: 0034-6748

## Beschreibung

Die Erfindung betrifft ein metallurgisches Gefäß, das mindestens einen von Kühlwasser durchflossenen abgeschlossenen Hohlraum aufweist sowie eine Vorrichtung zur Erkennung von Wasserleckagen des mindestens einen Hohlraums, wobei in dem Hohlraum mindestens ein Sensor angeordnet ist und wobei der Sensor bei der Detektion von Licht einen Alarm auslösen kann, wobei er dazu geeignet ist, eine Leckage durch die Detektion von Licht, welches durch ein Leck in den Hohlraum eindringt, zu erkennen.

Metallurgische Gefäße, beispielsweise Lichtbogenöfen, der gattungsgemäßen Art sind im Stand der Technik hinlänglich bekannt. Es wird beispielsweise auf die EP 0 359 398 A2 hingewiesen. Dort ist ein Lichtbogenofen beschrieben, dessen Wände wassergekühlt sind. Hierzu weist die Wandung des Gefäßes einen Hohlraum auf, der von Kühlwasser durchströmt wird.

Aufgrund der sehr hohen Temperaturen des verarbeiteten Materials ist das metallurgische Gefäß einer hohen Beanspruchung ausgesetzt. Die Kühlung des Gefäßes ist dabei funktionswichtig. Fällt die Kühlung der Wandelemente des Gefäßes aus, kann dies dramatische Konsequenzen bezüglich der Sicherheit des Bedienungspersonals haben. Weiterhin kann der durch Kühlungsausfall bedingte Schaden an der Einrichtung erheblich sein.

Daher ist in der genannten Schrift eine Detektionseinrichtung beschrieben, mit der Leckagen im Kühlkreislauf erkannt werden können. Hierbei wird auf die Detektion der Feuchtigkeit solcher Bereiche angestellt, die an den zu kühlenden Bereich angrenzen. Tritt infolge einer Leckage Flüssigkeit aus, kann dies durch die Feuchtigkeitssensoren erkannt und ein Alarm ausgelöst werden.

Ähnliche Lösungen, die auf die Messung der Feuchtigkeit zwecks Detektion von Leckagen abstellen, sind aus der EP 0 312 714 B1, aus der JP 2003 139473 A und aus EP 1 422 506 A der bekannt.

Die DE 30 13 465 A1 offenbart ein Verfahren zur Ortung von Leckstellen in Wasserleitungen u. ä. Hier wird durch eine Lichtquelle im Inneren der Leitung Licht emittiert und mittels eines lichtempfindlichen Sensors das reflektierte Licht der Lichtquelle gemessen, um auf Leckstellen schließen zu können.

Nachteilig ist bei den vorbekannten Lösungen, dass die Feuchtigkeitsmessung nicht dynamisch genug erfolgt. Es ist eine gewisse Zeit notwendig, bis die Feuchtigkeit den Sensor erreicht hat und dieser anspricht, Somit vergeht zu viel Zeit vom Auftreten der Leckage bis zu deren Erkennung. Außerdem ist ein relativ hoher Unsicherheltsgrad bei der Messung gegeben, da auch durch andere Einflüsse als Leckagen der Wandkühlung die Feuchtigkeit im Bereich des Gefäßes ansteigen kann.

Eine einfache Ermittlung von Leckagen kann auch durch die Differenzdurchfluss-Messung des Kühlwassers erfolgen. Hierzu sind Volumenstrom-Messgeräte bekannt. Nachteilig ist bei dieser Lösung, dass die Empfindlichkeit und Dynamik der Messung unzureichend sind vor dem Hintergrund, dass die wassergekühlten Wände mit sehr großen Durchflussraten gekühlt werden müssen und Wasserleckagen auch sehr klein sein können. Weiterhin ist der geräte-technische Aufwand nicht unerheblich und nicht für die Umgebungsbedingungen in einem Stahlwerk optimal.

Der Erfindung liegt daher die Aufgabe zugrunde, ein metallurgisches Gefäß der eingangs genannten Art so weiterzubilden, dass eine unmittelbarere, sicherere, eindeutigere und empfindlichere Detektion von Leckagen der wassergekühlten Bereiche erfolgen kann.

Die Lösung dieser Aufgabe durch die Erfindung ist dadurch gekennzeichnet, dass in dem Hohlraum ein mit dem Sensor verbundener Lichtleiter angeordnet ist, der sich zumindest über Teile des Hohlraums, vorzugsweise über die gesamte Länge des Hohlraums, erstreckt, wobei der Lichtleiter aus einem lichtleitenden Material besteht, in das fluoreszierendes Material eingelagert ist.

Die Erfindung stellt auf die Erkenntnis ab, dass es möglich ist, Leckagen dadurch zu erkennen, dass Infolge einer Öffnung im wassergekühlten Hohlraum, die eine Leckage verursacht, Licht in den ansonsten absolut dunkel abgeschlossenen Hohlraum eindringt. Gelingt es, dieses Licht zu detektieren, erhält man ein verbessertes Kriterium, um sehr schnell eine Leckage feststellen zu können.

Der Hohlraum weist bevorzugt mehrere fluidisch miteinander verbundene Abschnitte auf. Diese können einen mäanderförmigen Verlauf haben.

Bevorzugt wird nur ein einziger Licht-Sensor im Hohlraum eingesetzt. Dabei kann an dem einen Ende des kabelförmig oder strangförmig ausgebildeten Lichtleiters der Sensor angeordnet werden. Um Streuverluste im Lichtleiter zu verhindern, kann das andere Ende des Lichtleiters verspiegelt werden.

Der Lichtleiter mit integriertem bzw. eingelagertem fluoreszierenden Material wird auch als Fluoreszenzkollektor bezeichnet. Ein Fluoreszenzkollektor besteht aus einem optisch dichten Medium (z. B. Plexiglas), in das Moleküle eingebettet sind, die bei Einwirkung von Licht fluoreszieren. Durch eine (Total-)Reflexion am Lichtleiter wird ein Großteil des emittierten Lichts bis zu den Enden des Lichtleiters geleitet, wo es konzentriert austreten kann. Dies wird - wie erläutert - am einen Ende durch eine Verspiegelung verhindert; am anderen Ende ist der Sensor angeordnet, der das Licht detektiert. Als Trägermaterial für das fluoreszierende Material kann Polymethylmethacrylat (PMMA) eingesetzt werden, wobei sich als fluoreszierendes Material beispielsweise Fluorochrom eignet. Nachdem das Licht von den im Polymethylmethacrylat eingebetteten fluoreszierenden Molekülen absorbiert worden ist, erfolgt die anschließende Emission näherungsweise isotop, d. h. gleichmäßig verteilt nach allen Seiten.

Als lichtleitendes Material hat sich Glas oder Kunststoff (z. B. das bereits erwähnte Plexiglas) bewährt.

Damit die Kühlung durch den Lichtleiter nicht behindert wird, ist der Querschnitt des Lichtleiters bevorzugt wesentlich geringer als der Querschnitt der vom Kühlwasser durchströmten Abschnitte des Hohlraums, vorzugsweise geringer ist als 5 % dieses Querschnitts.

Der Sensor kann direkt mit einem Signalverstärker in Verbindung stehen. Weiterhin kann der Sensor und der Signalverstärker in einem elektromagnetische Strahlung abschirmenden Gehäuse angeordnet sein.

Um die vorhandene Infrastruktur hinsichtlich der Verdrahtung bzw. Verkabelung des metallurgischen Gefäßes nutzen zu können, ist der Sensor bevorzugt nahe an einer Temperaturmessstelle des metallurgischen Gefäßes angeordnet.

In der Zeichnung ist ein Ausführungsbeispiel der Erfindung dargestellt.

Es zeigen:
- Fig. 1: schematisch ein metallurgisches Gefäß, nämlich einen Lichtbo- genofen,
- Fig. 2: schematisch den Schnitt A-B gemäß Fig. 1, aus dem ein von Kühl- wasser durchströmter Hohlraum in der Wandung des Gefäßes er- sichtlich ist, und
- Fig. 3: die Einzelheit "Z" gemäß Fig. 2 samt Ende eines Lichtleiters.

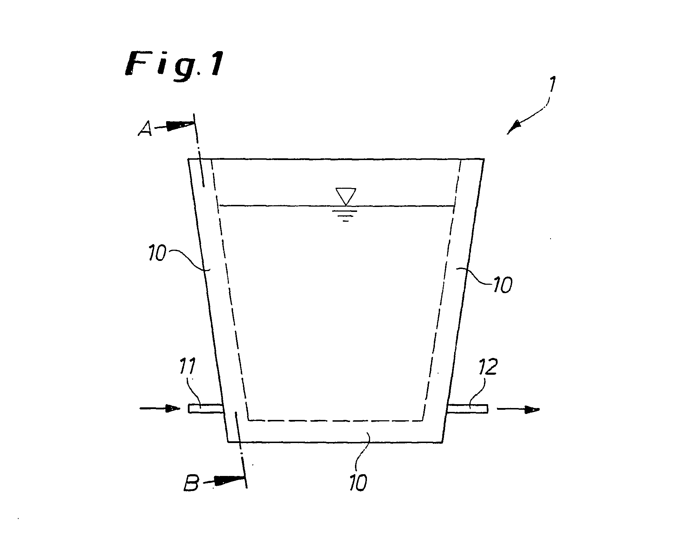

In Fig. 1 ist schematisch ein metallurgisches Gefäß 1 in Form eines Lichtbogenofens skizziert. Die Wandungen 10 des Gefäßes sind wassergekühlt. Ein Wasserzulauf 11 und ein Wasserablauf 12 sind schematisch dargestellt.

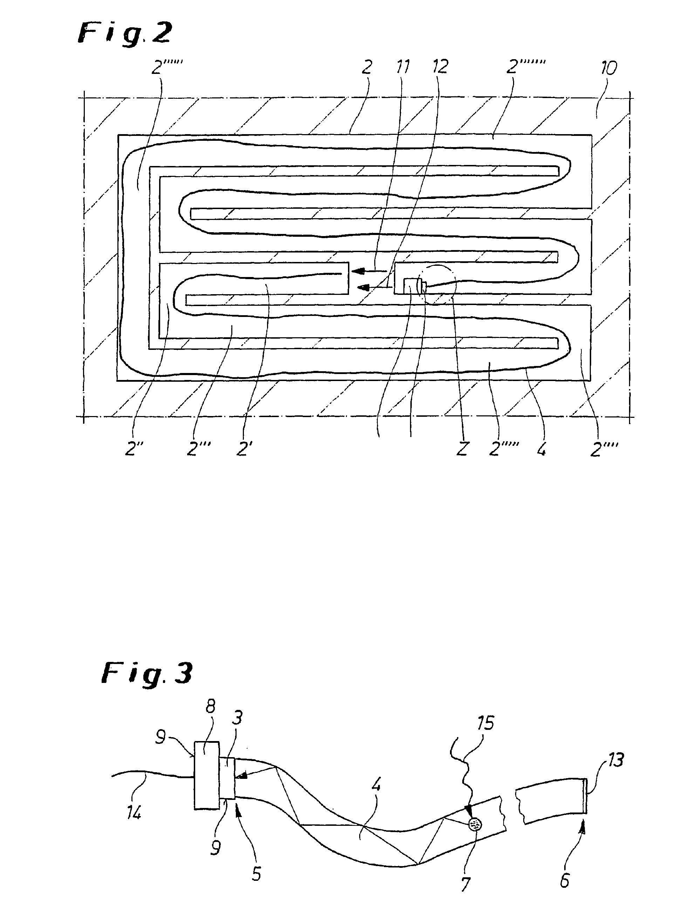

Der grundsätzliche Aufbau der Wandung 10 ergibt sich aus dem in Fig. 2 dargestellten Schnitt A-B gemäß Fig. 1. In die Wandung 10 ist ein mäanderförmig verlaufender, abgeschlossener Hohlraum 2 eingebracht, der einzelne Abschnitte 2', 2" 2"', 2"", 2"", 2""" und 2"""' aufweist. Der Wasserzulauf 11 in den Hohlraum 2 ist schematisch mit einem Pfeil angedeutet, genauso der Wasserablauf 12. Die Gefäßwandungen 10 können spritzwassergekühlt sein und bestehen in der Regel aus aneinander liegenden Rohrleitungen.

Über die gesamte Erstreckung des Hohlraums 2 entlang seinem mäanderförmigen Verlauf ist ein Lichtleiter 4 verlegt. Dieser ist mit seinem einen Ende 5 (s. Fig. 3) mit einem Licht-Sensor 3 verbunden. Das andere Ende 6 des Lichtleiters 4 weist einen Spiegel 13 auf.

Wie am besten aus Fig. 3 ersichtlich ist, sind in den kabelförmig bzw. strangförmig verlaufenden Lichtleiter 4 aus glasartigem Material fluoreszierende Partikel 7 eingebettet. Derartige Lichtleiter, die auch als Fluoreszenzkollektoren bezeichnet werden, sind im Stand der Technik bekannt.

In Fig. 3 ist schematisch die Leitung des einfallenden Lichts 15 entlang des Lichtleiters 4 bis zum Sensor 3 dargestellt. Das Licht 15 trifft auf den fluoreszierenden Partikel 7, der daraufhin aufleuchtet und das Licht entlang der Achse des Lichtleiters 4 infolge der schematisch eingetragenen Reflexionen an der Wand des Lichtleiters 4 weiterleitet.

Als Fluoreszenzkollektoren sind hochreine Fluoreszenzfarbstoffe mit polycyclischem Charakter und sehr hoher Hitze- und Lichtbeständigkeit in amorphen Kunststoffen geeignet. Die Eigenschaft von Fluoreszenzfarbstoffen, absorbiertes Licht bei anderer Wellenlänge wieder abzustrahlen, kann zur Lichtsammlung genutzt werden, was auch die vorgeschlagene Ausgestaltung nutzt. Der Fluoreszenzkollektor besteht vorliegend aus einem kristallklaren Kunststoffkabel, das mit einem Fluoreszenzfarbstoff eingefärbt ist. Die Fluoreszenzstrahlung wird innerhalb des Kabels durch Totalreflexion zum größten Teil an die Enden des Kabels weitergeleitet, wo es - am einen Ende 6 - gespiegelt bzw. - am anderen Ende 5 - in konzentrierter Form an den Sensor 3 abgestrahlt wird. Im Gegensatz zu Systemen auf Basis von Linsen und Spiegeln kann der Fluoreszenzkollektor auch diffuses, nicht gerichtetes Licht aufkonzentrieren.

Der Sensor 3 steht direkt mit einem Signalverstärker 8 in Verbindung. Dort wird das vom Sensor empfangene Signal verstärkt und über eine Leitung 14 an nicht dargestellte Steuerungsmittel weitergeleitet, die im Falle dessen, dass Lichteinfall in den Hohlraum 2 detektiert wird, Alarm auslösen.

Schädigungen in der wasserführenden Gefäßwandung 10, die zum Wasseraustritt führen, werden also aufgrund des Lichteintritts in den Hohlraum 2 durch den photoempfindlichen Sensor 3 erkannt, so dass sehr schnell, direkt, empfindlich und unmittelbar eine Leckage erkannt werden kann. Aufgrund der Verwendung des Lichtleiters kann das Überwachungssystem mit nur einem Sensor 3 auskommen, was das System preiswert macht. Durch den Lichtleiter kann jeder Bereich des unter Umständen sehr langen und mit vielen Winkeln versehenen Hohlraums 2 "eingesehen" werden. Fehlalarme wegen Störeinflüsse werden weitgehend ausgeschlossen.

Für die Platzierung des Sensors 3 und die Leitungsführung 14 kann die Lichterfassungsmesstechnik den vorhandenen Temperaturmessstellen des metallurgischen Gefäßes 1 angegliedert werden, um den Verdrahtungsaufwand am Gefäß zu beschränken.

### Bezugszeichenliste:

- 1: metallurgisches Gefäß
- 2: abgeschlossener Hohlraum
- 2': Abschnitt des Hohlraums
- 2": Abschnitt des Hohlraums
- 2'": Abschnitt des Hohlraums
- 2"": Abschnitt des Hohlraums
- 2""': Abschnitt des Hohlraums
- 2""": Abschnitt des Hohlraums
- 2"""': Abschnitt des Hohlraums
- 3: Licht-Sensor
- 4: Lichtleiter
- 5: Ende des Lichtleiters
- 6: Ende des Lichtleiters
- 7: fluoreszierendes Material
- 8: Signalverstärker
- 9: Gehäuse
- 10: Wandung
- 11: Wasserzulauf
- 12: Wasserablauf
- 13: Spiegel
- 14: Leitung
- 15: einfallendes Licht

## Patentansprüche

1. Metallurgisches Gefäß (1), das mindestens einen von Kühlwasser durchflossenen abgeschlossenen Hohlraum (2) aufweist sowie eine Vorrichtung zur Erkennung von Wasserleckagen des mindestens einen Hohlraums (2), wobei in dem Hohlraum (2) mindestens ein Sensor (3) angeordnet ist und wobei der Sensor (3) bei der Detektion von Licht einen Alarm auslösen kann, wobei er dazu geeignet ist, eine Leckage durch die Detektion von Licht, welches durch ein Leck in den Hohlraum (2) eindringt, zu erkennen,
**dadurch gekennzeichnet,**
**dass** in dem Hohlraum (2) ein mit dem Sensor (3) verbundener Lichtleiter (4) angeordnet ist, der sich zumindest über Teile des Hohlraums (2), vorzugsweise über die gesamte Länge des Hohlraums (2), erstreckt, wobei der Lichtleiter (4) aus einem lichtleitenden Material besteht, in das fluoreszierendes Material (7) eingelagert ist.

2. Metallurgisches Gefäß nach Anspruch 1,
**dadurch gekennzeichnet,**
**dass** der Hohlraum (2) mehrere fluidisch miteinander verbundene Abschnitte (2', 2", 2'", 2"", 2'"", 2""", 2"'"") aufweist.

3. Metallurgisches Gefäß nach Anspruch 2,
**dadurch gekennzeichnet,**
**dass** die fluidisch miteinander verbundenen Abschnitte (2', 2", 2"', 2"", 2""', 2""", 2"""') einen mäanderförmigen Verlauf aufweisen.

4. Metallurgisches Gefäß, nach einem der Ansprüchen 1 bis 3,
**dadurch gekennzeichnet,**
**dass** an dem einen Ende (5) des Lichtleiters (4) der Sensor (3) angeordnet ist.

5. Metallurgisches Gefäß nach Anspruch 4,
**dadurch gekennzeichnet,**
**dass** das andere Ende (6) des Lichtleiters (4) verspiegelt ist.

6. Metallurgisches Gefäß nach einem der Ansprüche 1 bis 5,
**dadurch gekennzeichnet,**
**dass** das lichtleitende Material Glas ist.

7. Metallurgisches Gefäß nach einem der Ansprüche 1 bis 5,
**dadurch gekennzeichnet,**
**dass** das lichtleitende Material Kunststoff, insbesondere Plexiglas, ist.

8. Metallurgisches Gefäß nach einem der Ansprüche 1 bis 7,
**dadurch gekennzeichnet,**
**dass** der Querschnitt des Lichtleiters (4) wesentlich geringer ist als der Querschnitt der vom Kühlwasser durchströmten Abschnitte (2', 2", 2"', 2"", 2""', 2""", 2"""') des Hohlraums (2), vorzugsweise geringer ist als 5 % dieses Querschnitts.

9. Metallurgisches Gefäß nach einem der Ansprüche 1 bis 8,
**dadurch gekennzeichnet,**
**dass** der Sensor (3) mit einem Signalverstärker (8) in Verbindung steht.

10. Metallurgisches Gefäß nach Anspruch 9,
**dadurch gekennzeichnet,**
**dass** der Sensor (3) und der Signalverstärker (8) in einem elektromagnetische Strahlung abschirmenden Gehäuse (9) angeordnet sind.

11. Metallurgisches Gefäß nach einem der Ansprüche 1 bis 10,
**dadurch gekennzeichnet,**
**dass** der Sensor (3) nahe an einer Temperaturmessstelle des metallurgischen Gefäßes angeordnet ist.

12. Metallurgisches Gefäß nach einem der Ansprüche 1 bis 11,
**dadurch gekennzeichnet,**
**dass** es ein Lichtbogenofen ist.

## Claims

1. Metallurgical vessel (1), which comprises at least one closed cavity (2) flowed through by cooling water, as well as a device for recognising water leakages of the at least one cavity (2), wherein at least one sensor (3) is arranged in the cavity (2) and wherein the sensor (3) on detection of light can trigger an alarm, wherein the sensor is suitable for the purpose of recognising a leakage through the detection of light which penetrates through a leak in the cavity (2), **characterised in that** an optical waveguide (4), which is connected with the sensor (3) and extends at least over parts of the cavity (2), preferably over the entire length of the cavity (2), is arranged in the cavity (2), wherein the optical waveguide (4) consists of a light-conducting material in which fluorescing material (7) is included.

2. Metallurgical vessel according to claim 1, **characterised in that** the cavity (2) has several sections (2', 2", 2"', 2"", 2""', 2""", 2"""') in fluid connection with one another.

3. Metallurgical vessel according to claim 2, **characterised in that** the sections (2', 2", 2"', 2"", 2""', 2""", 2"""') in fluid connection with one another have a meandering course.

4. Metallurgical vessel according to any one of claims 1 to 3, **characterised in that** the sensor (3) is arranged at one end (5) of the optical waveguide (4).

5. Metallurgical vessel according to claim 4, **characterised in that** the other end (6) of the optical waveguide (4) is reflective.

6. Metallurgical vessel according to any one of claims 1 to 5, **characterised in that** the light-conducting material is glass.

7. Metallurgical vessel according to any one of claims 1 to 5, **characterised in that** the light-conducting material is plastics material, particularly 'Plexiglas'.

8. Metallurgical vessel according to any one of claims 1 to 7, **characterised in that** the cross-section of the optical waveguide (4) is substantially smaller than the cross-section of the sections (2', 2", 2"', 2"", 2""', 2""", 2"""'), which are flowed through by the cooling water, of the cavity (2), preferably less than 5% of this cross-section.

9. Metallurgical vessel according to any one of claims 1 to 8, **characterised in that** the sensor (3) is connected with a signal amplifier (8).

10. Metallurgical vessel according to claim 9, **characterised in that** the sensor (3) and the signal amplifier (8) are arranged in a housing (9) screening electromagnetic radiation.

11. Metallurgical vessel according to any one of claims 1 to 10, **characterised in that** the sensor (3) is arranged close to a temperature measuring point of the metallurgical vessel.

12. Metallurgical vessel according to any one of claims 1 to 11, **characterised in that** it is an arc furnace.

## Revendications

1. Récipient métallurgique (1), qui présente au moins un espace creux (2) fermé, traversé par de l'eau de refroidissement ainsi qu'un dispositif pour la détection de fuites d'eau dudit au moins un espace creux (2), au moins un capteur (3) étant disposé dans l'espace creux (2) et le capteur (3) pouvant déclencher une alarme en cas de détection de lumière, le capteur étant approprié pour détecter une fuite par la détection de lumière qui pénètre via une fuite dans l'espace creux (2), **caractérisé**
**en ce qu'**un conducteur de lumière (4) raccordé au capteur (3) est disposé dans l'espace creux (2), qui s'étend au moins sur des parties de l'espace creux (2), de préférence sur toute la longueur de l'espace creux (2), le conducteur de lumière (4) étant constitué par un matériau guidant la lumière dans lequel est incorporé un matériau fluorescent (7).

2. Récipient métallique selon la revendication 1, **caractérisé en ce que** l'espace creux (2) présente plusieurs parties (2', 2", 2"', 2"", 2""', 2""", , 2"""') raccordées de manière fluidique les unes aux autres.

3. Récipient métallique selon la revendication 2, **caractérisé en ce que** les parties (2', 2", 2"', 2"", 2""', 2""", 2"""') raccordées de manière fluidique les unes aux autres présentent une allure en forme de méandres.

4. Récipient métallurgique selon l'une quelconque des revendications 1 à 3, **caractérisé**
**en ce que** le capteur (3) est disposé en l'une extrémité (5) du conducteur de lumière (4).

5. Récipient métallique selon la revendication 4, **caractérisé en ce que** l'autre extrémité (6) du conducteur de lumière (4) est étamé.

6. Récipient métallurgique selon l'une quelconque des revendications 1 à 5, **caractérisé**
**en ce que** le matériau guidant la lumière est du verre.

7. Récipient métallurgique selon l'une quelconque des revendications 1 à 5, **caractérisé**
**en ce que** le matériau guidant la lumière est un matériau synthétique, en particulier du Plexiglas.

8. Récipient métallurgique selon l'une quelconque des revendications 1 à 7, **caractérisé**
**en ce que** la section du conducteur de lumière (4) est essentiellement plus faible que la section des parties (2', 2", 2"', 2"", 2""', 2""", 2"""') traversées par l'eau de refroidissement de l'espace creux (2), de préférence inférieure à 5% de cette partie.

9. Récipient métallurgique selon l'une quelconque des revendications 1 à 8, **caractérisé**
**en ce que** le capteur (3) est raccordé à un amplificateur de signaux (8).

10. Récipient métallique selon la revendication 9, **caractérisé en ce que** le capteur (3) et l'amplificateur de signaux (8) sont disposés dans un châssis (9) protégeant contre le rayonnement électromagnétique.

11. Récipient métallurgique selon l'une quelconque des revendications 1 à 10, **caractérisé**
**en ce que** le capteur (3) est disposé à proximité d'un site de mesure de la température du récipient métallurgique.

12. Récipient métallurgique selon l'une quelconque des revendications 1 à 11, **caractérisé**
**en ce qu'**il s'agit d'un four à arc électrique.
